# EUROPEAN PATENT APPLICATION

(11) **EP 3 135 441 A1**
(43) Date of publication of application: **01.03.2017**
(21) Application number: 16182725.8
(22) Date of filing: 04.08.2016
(51) Int. Cl.: B25J 5/00, B25J 9/08, B25J 9/16, B25J 11/00, B25J 15/04, B25J 19/02

(54) **MODULAR ROBOT ASSEMBLY KIT, SWARM OF MODULARIZED ROBOTS AND METHOD OF FULFILLING TASKS BY A SWARM OF MODULARIZED ROBOTS**

(30) Priority: 26.08.2015 DE 102015216272
(71) Applicant: Airbus Operations GmbH, 21129 Hamburg (DE)
(72) Inventor: KROHNE, Ingo, 21129 Hamburg (DE); GOEHLICH, Robert Alexander, 21129 Hamburg (DE); BORCHERT, Tom, 21129 Hamburg (DE); FRAGA SERAFIM, Camila, 22765 Hamburg (DE)
(74) Representative: Isarpatent

(57) **Abstract**

The present invention pertains to a modularized robot having a robot platform configured to convey mobility and connectivity to external components to the modularized robot, a robot workhead configured to convey the ability to perform an operational task to the modularized robot, and a robot adapter attached to either the robot platform or the robot workhead and configured to mechanically link the robot platform to the robot workhead. Moreover, a swarm of modularized robots and a robot system include such modularized robots.

## Description

### TECHNICAL FIELD

The present invention relates to a modularized robot, a modular robot assembly kit, a swarm of modularized robots built up from a modular robot assembly kit, and a method of fulfilling tasks by a swarm of modularized robots, particularly in the assembly, construction, maintenance and/or repair of vehicles such as aircraft or spacecraft.

### TECHNICAL BACKGROUND

Unmanned robotic vehicles (URVs) are remotely controlled or autonomously manoeuvring vehicles that do not require a pilot to be on board of the vehicle. URVs may be controlled remotely by a controller at a ground control station or may fly, swim, float, drive or otherwise move autonomously based on predefined movement routes or dynamic routing or navigation algorithms.

Such URVs may cooperate in a swarm in fulfilling complex tasks or chains of tasks. Often, a swarm of robots consists of a multitude of similarly constructed robots that have one and the same functionality or the same set of multiple functionalities. Robots in a swarm are usually employed for various menial tasks which would otherwise cause a challenge to a human worker due to a difficult accessibility of the location of the task, which do not require high technical qualification of a worker, which are repetitive in nature within narrow boundary conditions, which are to be performed in an environment hazardous for humans, which are dangerous in nature or which support a human worker in a collaborative manner.

For example, document US 8,755,936 B2 discloses a robot system architecture which enables the creation and use of service robots which have a plurality of on-board robot functions as a shared, central resource for any number of robots performing functions either serially or simultaneously in a facility. Document US 2010/0094459 A1 discloses a system for cooperation of multiple mobile robots that allow the multiple mobile robots to cooperatively execute one complicated task, using centralized control architecture and robot cooperation application codes on the basis of conceptual behavior units to execute a robot cooperation application tied to actual functions of the robots. Document WO 2013/119942 A1 discloses a job management system for a fleet of mobile robots that automatically determines the actual locations and actual job operations for the job requests, and intelligently selects a suitable mobile robot to handle each job request based on the current status and/or the current configuration for the selected mobile robot.

Swarms of identical or analogously built robots, however, are either inflexible due to their limited range of functions, or they utilize overly large robots with lots of functions which only get put to full use during a fraction of the time that the robots are in operation. Thus, individualized and more flexible robot systems have been devised in the art. Documents US 7,555,363 B2, US 7,720,570 B2, US 8,805,579 B2 and WO 2013/152414 A1 disclose examples of robot assembly systems relying on individual robot components with diverse functionality which may be assembled to form an individualized robot.

Advances in distributed robotics have also been made with regard to architectures, task planning capabilities, and control of swarms of mobile robots, in particular to address the issues of action selection, delegation of authority and control, the communication structure, heterogeneity versus homogeneity of robots, achieving coherence amidst local actions, and resolution of conflicts. An overview in this area may for example be found in Arai, T., Pagello, E., Parker L.E.: "Editorial: Advances in Multi-Robot Systems"; IEEE Transactions on Robotics and Automation, vol. 18(5), October 2002, p. 655-661.

### SUMMARY OF THE DISCLOSURE

One object of the invention is thus to provide solutions for robots that are freely and flexibly configurable and that may be employed in a multi-tasking environment in an efficient manner.

This object is achieved by a modularized robot having the features of claim 1, a modular robot assembly kit having the features of claim 6, a swarm of modularized robots having the features of claim 9 or 10, a robot system having the features of claim 11 and a method of fulfilling tasks by a swarm of modularized robots having the features of claim 12. The aforementioned devices, systems and methods may be particularly employed in the assembly, construction, maintenance and/or repair of vehicles such as aircraft or spacecraft.

According to a first aspect of the invention, a modularized robot comprises a robot platform configured to convey mobility and connectivity to external components to the modularized robot, a robot workhead configured to convey the ability to perform an operational task to the modularized robot, and a robot adapter attached to either the robot platform or the robot workhead and configured to mechanically link the robot platform to the robot workhead.

According to a second aspect of the invention, a modular robot assembly kit comprises a plurality of robot platforms, each configured to convey mobility and connectivity to external components to an assembled modular robot, and a plurality of robot workheads, each configured to convey the ability to perform one of a plurality of operational tasks to an assembled modular robot, wherein each of the plurality of robot workheads comprises a robot adapter configured to mechanically link one of the robot platforms to the respective robot workhead.

According to a third aspect of the invention, a swarm of modularized robots comprises a plurality of modularized robots according to the first aspect of the invention and/or a plurality of modularized robots built with a modular robot assembly kit according to the second aspect of the invention.

According to a fourth aspect of the invention, a robot system comprises a swarm of modularized robots according to the third aspect of the invention, a centralized task database configured to store and update a plurality of tasks to be performed by the swarm of modularized robots, and a task controller coupled to the centralized task database and configured to manage the stored tasks in the centralized task database depending on priority, hierarchy and/or importance of the tasks.

According to a fifth aspect of the invention, a method of fulfilling tasks by a swarm of modularized robots comprises the steps of providing, by a centralized task database, a task to a plurality of robot workheads, each of the robot workheads configured to convey the ability to perform one of a plurality of operational tasks to an assembled modular robot, determining, by the plurality of robot workheads, one of a plurality of robot platforms to combine with, each configured to convey mobility and connectivity to external components to an assembled modular robot, forming one or more modularized robots by connecting one or more of the plurality of robot workheads with the determined one of the plurality of robot platforms, and performing, by the combined modularized robot, the provided task.

The idea on which the present invention is based is to build robots in a modularized manner from a robot platform providing positioning and mobility, and a robot workhead providing functionality and tooling for the robot. Both platform and workhead may be designed with a universal adapter mechanism in order to combine various platforms and workheads interchangeably and flexibly. The functional capabilities of such a modularized robot may be flexibly distributed over the platforms and the workheads. The platform may provide basic mobility and relocation capabilities to the robot which may perform customized task due to the specialization in the workhead with which the platform is combined. The functional range of an individual workhead may be advantageously limited to one or a low number of functions so that the workhead may be kept small, lean and cost-efficient.

Different platform types may be used to form different robot types: The platform may for example be a wheeled, caterpillar type, bladed, skidded, pedalled or suction cup platform, capable of forming an unmanned mobile ground vehicle (UMGV). The platform may alternatively be a winged, propeller type, hovering or jet/rocket-engine platform, capable of forming an unmanned aerial vehicle (UAV) or flying drone. The platform may also be a connector platform for a stationary robotic device, such as a robotic arm, an industrial robot, pick-and-place robot or any other automaton with limited range movement capability. The platform may finally also be a connector platform for a handheld tool, reach extension boom or stabilizing carrier frame which may be held, carried and operated by a human worker or user.

Similarly, different workhead types may be used to implement working functionality for different tasks that a robot is to perform: The workhead may be specialized for various surveillance or monitoring tasks, such as an autonomous survey of an interior and/or exterior of an airborne vehicle to be inspected and autonomous gathering of state parameters. To that end, the workhead may employ one or more of workhead mounted sensors such as cameras, laser scanners, ultrasonic sensors, magnetic sensors, infrared sensors, barcode scanners, chemical sensors, gas sensors, metal detectors, biosensors and similar physical parameter detection devices. The workhead may further, additionally or alternatively, include working tools that provide specific interaction with the environment, for example in an assembly, construction, maintenance or repair setting. The workhead may for example employ cleaning devices, printing devices, fastening devices, welding devices, screwing devices, electric testing devices, clamping devices, vacuuming devices, gluing devices, stamping devices, bolting devices, drilling devices or any other similar type of working tool.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates an exemplary modularized robot according to an embodiment.
Fig. 2 schematically illustrates an exemplary modularized robot according to another embodiment.
Fig. 3 schematically illustrates an exemplary modularized robot according to another embodiment.
Fig. 4 schematically illustrates an exemplary modularized robot with a user wielding it according to another embodiment.
Fig. 5 schematically illustrates an exemplary modularized robot according to another embodiment.
Fig. 6 schematically illustrates structural details of a modularized robot according to another embodiment.
Fig. 7 schematically illustrates an exemplary modularized robot with a specific workhead according to another embodiment.
Fig. 8 schematically illustrates an exemplary modularized robot with a specific workhead according to another embodiment.
Fig. 9 schematically illustrates an exemplary modularized robot with a specific workhead according to another embodiment.
Fig. 10 schematically illustrates an exemplary modularized robot with a specific workhead according to another embodiment.
Fig. 11 schematically illustrates an exemplary modularized robot with a specific workhead according to another embodiment.
Fig. 12 schematically illustrates a working environment for a swarm of modularized robots according to another embodiment.
Fig. 13 schematically illustrates a control system architecture for a swarm of modularized robots according to another embodiment.
Fig. 14 schematically illustrates stages of a method for fulfilling tasks by a swarm of modularized robots according to another embodiment.

### DETAILED DESCRIPTION OF EMBODIMENTS

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Robots within the meaning of the present disclosure may comprise any automatic machine or artificial agent which is controlled by means of electronic circuitry or computer software. Particularly, robots with the meaning of the present disclosure may include mobile robots which comprise any automation capable of locomotion. Mobile robots within the meaning of the present disclosure are not bound to a single physical location and are able to propel themselves forward towards another physical location. Mobile robots within the meaning of the present disclosure include any autonomously acting agents ("autonomous mobile robot", AMR) and externally guided agents ("autonomously guided vehicles", AGV).

Robots may in particular include any unmanned vehicles (UMV) include airbound (UAV) and ground vehicles (UGV) that may be controlled without a human pilot aboard. UAVs and UGVs may have their airbased or groundbased movement controlled either autonomously by onboard computers or remotely by a pilot in a ground-based control station or in another vehicle.

A UAV may for example comprise a quadcopter, a quadrotor helicopter, a quadrocopter, or a quad rotor. Generally, a quadcopter is an aerial rotorcraft that is propelled by four rotors. In certain embodiments, control of UAV motion may be achieved by altering the pitch or rotation rate of one or more rotors. Other configurations are also possible for suitable UAVs, including multi-rotor designs such as, for example, dual rotor, trirotor, hexarotor, and octorotor, or single-rotor designs such as helicopters. UAVs within the meaning of the present disclosure may also comprise fixed-wing UAVs. UAVs may have vertical take-off and landing (VTOL) capabilities. In some embodiments, the rotors of UAVs may be manufactured from soft, energy absorbing and impact-resistant materials. In some embodiments, the UAVs have frames that enclose the rotors. Enclosing the rotors can have advantages, such as reducing the risk of damaging either the UAV or its surroundings. The propulsion system can also be ducted. In certain embodiments, the UAV can be a compound rotorcraft, for example, having wings that provide some or all of the lift in forward flight. In some embodiments, the UAV may be a tiltrotor aircraft. In another embodiment, the UAV may have jet engines or rocket engines and use reaction wheels for stabilization, so that they may also operate in a vacuum environment for tasks such as maintenance of outside locations of space stations or satellites.

A UGV may for example include a rover, a ground based drone, an omni-wheeled ground vehicle, a Mecanum wheeled vehicle and other mobile robots capable of movement along or on the ground. For example, the UGV may also comprise hexapod robots, quadruped robots, robots with whegs, bipedal robots, robots with transport means conveying metachronal motion or other mechanisms that allow robots to transport themselves from place to place autonomously.

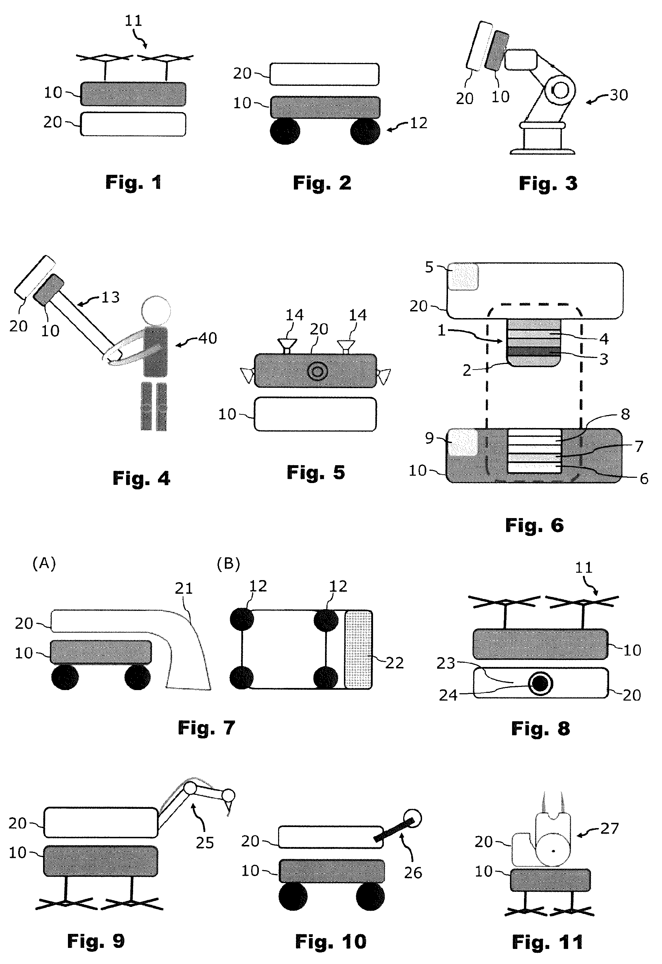

Figs. 1 to 5 schematically illustrate the principles of modularized robots according to embodiments of the invention with regard to the concept of modularization. Fig. 6 schematically illustrates general structural details of a modularized robot which apply to any of the modularized robots according to the embodiments of the invention. Figs. 7 to 11 show conceptual sketches of various modularized robots with different workheads for different functional applications. The common details of the modularized robots as depicted in Figs. 1 to 11 will first be explained in conjunction with Fig. 6, particularly with respect to the robot platform and the robot workhead of the modularized robots. Thereafter, various implementation examples for both the robot platform as well as the robot workhead will be explained in conjunction with Figs. 1 to 5 and Figs. 7 to 11, respectively.

The general structure of a modularized robot, as illustrated in Fig. 6, involves a robot platform 10 and a robot workhead 20 that are connected via a universal robot adapter 1. The robot platform 10 is designed as a basic chassis module for a modularized robot and is configured to convey mobility and connectivity to external components to the robot. The robot workhead 20, in turn, is designed as a customized functional module and is configured to convey the ability to perform certain operational tasks to the robot. The robot adapter 1 may generally be the structural, communication and/or power supply link between the robot platform 10 and the robot workhead 20. A modularized robot consisting of connected robot platform 10 and robot workhead 20 is a fully autonomous system which is capable of performing operational tasks, especially in non-ergonomic conditions for workers during construction, assembly, maintenance and/or repair of aircraft or spacecraft. In exemplary embodiments, each modularized robot may have a maximum weight of about 3 kg and a maximum width, height or depth of about 20 cm.

The robot adapter 1 may have a mechanical connector 2 which is designed and configured to mechanically interlock with a corresponding mechanical receptacle 6 in the counterpart robot module. For example, the robot adapter 1 may be formed as a structural element protruding from either the robot platform 10 or the robot workhead 20 at a certain fixed location with respect to the receptacle 6 in the other one of robot platform 10 and robot workhead 20, as applicable. Various locking mechanisms may be used for the mechanical connector 2, such as a bayonet lock, a snap-fit lock, or a threaded engagement mechanism. Moreover, the robot adapter 2 may have inbuilt poka-yoke mechanisms that prevent the platform 10 and the workhead 20 to be coupled incorrectly.

The robot adapter 1 may further be configured to form data communication link between the robot platform 10 and the robot workhead 20. As each of the platform 10 and the workhead 20 are equipped with electronic circuitry forming control logic of the component, such as an ASIC ("application-specific integrated circuit"), an FPGA ("field programmable gate array"), a microprocessor or similar programmable logic devices, data relating to the respective platform 10 and the momentarily connected workhead 20 may be exchanged via a data communication protocol. The robot adapter 1 may have a data interface 3 which is coupled with a data interface 7 within the adapter receptacle. The data interfaces 3 and 7 may for example be USB ports and the data communication may be effected via a standardized communication protocol, such as USB protocols. Other connectors and protocols may be equally feasible as well, such as Firewire, PCI, PCIexpress, Thunderbolt, SATA, RS-232 or similar communication standards.

Moreover, the robot adapter 1 may further be configured to provide an electrical power supply connection between the robot platform 10 and the coupled robot workhead 20. To that end, the robot adapter 1 may have a power connector 4 that may be coupled to a power connector 8 in the adapter receptacle. The robot platform 10 or the robot workhead 20, or alternatively both, may be equipped with a power supply system, such as a power generation system, a fuel cell, a solar panel, an accumulator, a rechargeable battery or an exchangeable battery. In case that one of the platform 10 and the workhead 20 is not equipped with its own power supply, the respective other component may provide electric power via the power connectors 4 and 8 over the robot adapter 1. The voltage level of the power supply may for example be 5 V and may in particular be executed via a standardized power supply interface. It may for example be possible to supply power over a USB interface that is used as data interface 3 and 7 anyway.

The robot platform 10 and the robot workhead 20 may both be equipped with a microprocessor 5 and 9, respectively, which executes software or firmware responsible for the autonomous functionality of the platform 10 and the workhead 20, respectively. The microprocessors 5 and 9 may be configured to provide wireless communication, network access capabilities and data exchange capabilities as well. Moreover, the microprocessors 5 and 9 may have inbuilt or attached data memory devices for temporarily and/or permanently storing application software, module operating systems and/or configuration data for the platform 10 and the workhead 20.

A modularized robot as implemented according to the general concept given in Fig. 5 may in particular improve the ergonomic situation for a worker by avoiding non-ergonomic positions for the worker. It may further improve the production quality by improving the repeatability due to the autonomy of the robot in carrying out their delegated tasks, even during shifts without workers. The robots may work in a collaborative modus to support human workers and/or other robots in the swarm in the fulfilment of their tasks. When a multitude of modularized robots is employed, the development and production leads to higher efficiency and lower costs per piece since all parts and components of the robots may be manufactured depending on the customized scope of functionality and the robots themselves may be flexibly combined to create a larger variety of individual robots. Due to the flexibility and mobility, a modularized robot may use its capacities to full extent not only within different stations, but also within several buildings/hangars. Modularized robot may independently move within a defined area, the benefits are not limited to one specific hangar.

Figs. 1 to 5 show exemplary embodiments of various robot platforms 10. The robot platforms 10 may be standardized "plug-and-play" platform which are responsible for the displacement, relocation and movement of a modularized robot. Independently of the operational function or application of the modularized robot, the robot platform 10 may be chosen according to accessibility and positional requirements. The robot platform 10 may for example be an aerial vehicle such as a drone with helicopter or quadcopter blades 11 (Fig. 1) or cold gas nozzles 14 (Fig. 5), a ground vehicle with movement conveying kinematic devices such as spider legs, suction caps or wheels 12 (Fig. 2), a connector platform for coupling to industrial robots 30 (Fig. 3), or a connector platform mounted on an extension boom 13 which may be handheld and carried by a human worker 40 (Fig. 4). Modularized robots with robot platforms 10 conveying aerial movement may in principle also be employed as diving robots for exploration, maintenance or repair tasks under water.

Figs. 7 to 11 show exemplary embodiments of various robot workheads 20 and the implementation as specific task-bound modularized robots. The robot workhead 20 may for example be a vacuum cleaner system 21 which may be used to evacuate all the chips and dust remaining from drilling processes (Fig. 7(A)). The vacuum cleaner entry may be equipped with a grid 22 near the ground to avoid contact between chips and the pump system of the vacuum cleaner system 21 (Fig. 7(B) - bottom view of Fig. 7(A)). Vacuum cleaner robots may be controlled by a wheeled platform 10 which polices the areas already cleaned and causes them to drive to not yet cleaned remaining areas. Vacuum cleaner robots may evacuate chips and dust remaining from drilling processes, as well as screws, bolts, rivets, adhesive strips, tapes, claims, clips, brackets or scraps of wire left on the floor.

The robot workhead 20 may further comprise a monitoring and surveillance unit containing a black light 23 and a camera system 24 to inspect the surface protection quality (Fig. 8). The monitoring and surveillance robots may register positions where non-quality evidences were detected and may, under control of the robot platform 10, police the areas already inspected or relocate to not yet inspected remaining areas. Monitoring and surveillance robots may conveniently use aerial robot platforms 10 with helicopter blades 11 in order to have a better overview over the working environment. They may be used for a quality control of defects on surface protection or the painting as well as a visual inspection of rivets and bolts.

The robot workhead 20 may further comprise a 3D-printer system 25 to print necessary brackets or other fasteners to sustain certain systems or any other plastic component which may be printed using an additive manufacturing technique (Fig. 9). Such printing robots may advantageously relieve human workers from working in non-ergonomic positions to assemble brackets on the fuselage of aircraft. The robot platforms 10 of printing robots may control the movement of the robot, police the brackets already printed, and relocate them in an organized manner to the next positions where brackets need to be printed.

The robot workhead 20 may further comprise extensible roll 26 to clean surfaces before surface protection and/or after certain operations have been performed on the surface, such as drilling, countersinking or similar (Fig. 10). The roll-cleaner robots may be controlled by a wheeled robot platform 10 which cause the robot police the areas already cleaned and cause them to drive to areas yet to be cleaned, using for example wipes, sponges and/or liquid chemicals and detergents.

The robot workhead 20 may further comprise wire fixers 27 that include a support for wires and bracket and a number of electronic screwdrivers which are configured to position the wires to be fixed in their correct position and subsequently fix the bracket with screws (Fig. 11). Such wire fixing robots may be controlled by aerial platforms 10 that assure positional stability and synchronization needed for the wire-fixing process.

Other robot types may of course be combined as well, for example for rivet head sealing, applying surface protection in difficult access areas, applying sealing coating on surfaces and fasteners or screwing. Robots may be devised to support other robots or human works in placing, handling and positioning components and parts in a precise location and to measure their precise positioning.

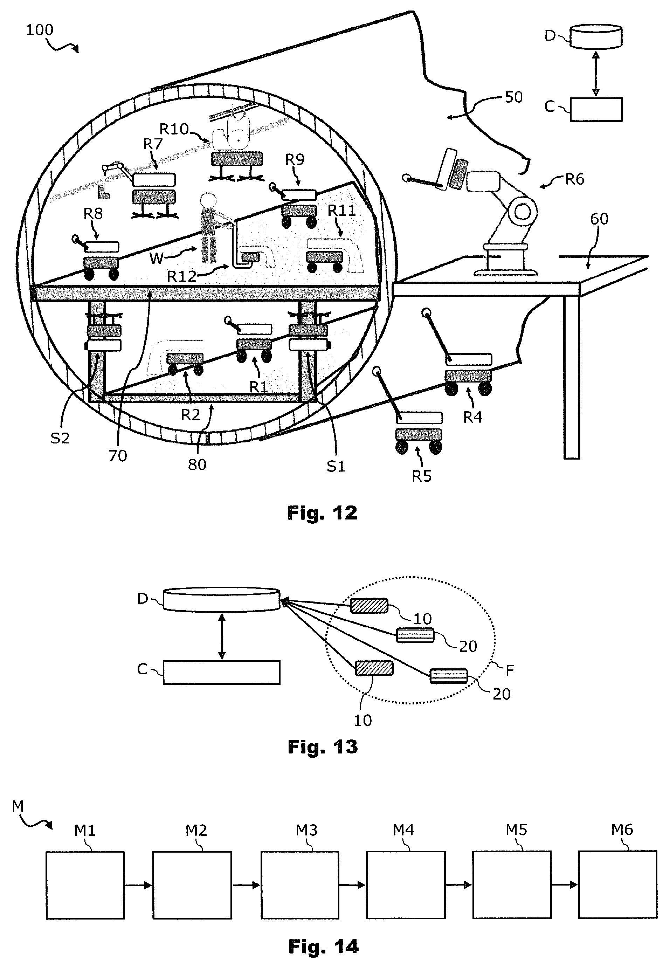

Fig. 12 exemplarily depicts a working environment 100 in which a swarm of modularized robots may be employed. The swarm of modularized robots may include working robots R1 to R11 which perform different tasks and subtasks at different locations in the vicinity of a fuselage section 50 of an aircraft. Some robots R4, R5 and R6 may for example work on the outside of the fuselage section, for example on a scaffolding 60. Some other robots R7, R8, R9, R10 and R11 may work on the inside of the fuselage section 50, for example on a flight deck 70 of the aircraft. Some robots R1, R2 may for example work on a cargo deck 80 of the aircraft. The swarm of robots may for example include monitoring and surveillance robots S1, S2 which are tasked with supervising the working environment, giving alarm in case of problems and/or relaying task completion information to a centralized database D. The centralized database D may include a hierarchical listing of tasks to be executed. A task controller C may be responsible for managing the tasks stored in the centralized database D. The working environment 100 of Fig. 12 may also be implemented in a module of a space station with swarm robots performing assembly tasks, maintenance tasks and/or experiments.

Due to their modularity and flexibility, the swarm robots may be able to work in any environment, even in areas which are difficult to gain access to, in cargo and bilge zones or in areas with contaminants or hazardous risks such as high-voltage lines. The robot platforms 10 with mobility conveying modules allow the robots to change hangars. The mobile robots may be equipped with an anti-collision system in order to be able to move autonomously in the working environment with a low risk for collision with another robot or a worker W that works with a connector platform R12 for a handheld and manual application.

In suitable locations, storehouse facilities for parking, recharging and interchanging functional tools and equipment may be provided remote from the working site. The robots may be directed towards such storehouse facilities for a change of robot workheads 20 on a given robot platform 10 or a change of mobility platform 10 for a given robot workhead 20. The re-assembly of modularized robots may be performed autonomously by the robots themselves, by using support robots and/or by human intervention.

The working environment 100 may also be employed for spacecraft or a space station with a human crew, particularly. The swarm of modularized robots may in particular comprise drones that are configured and designed to work in space with no or very little gravity. Robot platforms 10 for such robots may for example comprise jet propulsion systems or rocket engines with cold gas nozzles and reaction wheels. Mobile robots that are designed to assist human crew members in space stations may be equipped with climbing legs so that their degree of freedom in movement is restricted to the mechanical structure of the space station.

Fig. 13 schematically illustrates a control system architecture for a swarm F of modularized robots and robot modules. The swarm F may comprise combined robots and/or robot platforms 10 and robot workheads 20 as discrete swarm members. As each of the robot platforms 10 and robot workheads 20 may have its own microprocessor with control logic, each of those platforms 10 and workheads 20 may separately participate in the functional swarm intelligence as individual swarm member.

The different swarm members 10, 20 (and possibly combined robots) operate in a swarm modus by having a decentralized intelligence due to the smart functionality module in each member 10, 20. The basis for the swarm operation could be for example a multi-agent control mechanism or a neuronal network. The swarm members may on one hand communicate with the centralized database D in order to collect new tasks, deliver the results of the fulfilment of the tasks or any update related to task management to the centralized database D as job card progress. The task controller C may retrieve the dynamically updated information in the centralized database D, set up new tasks, delete completed tasks or re-prioritize the tasks in relation to each other. The swarm members may, on the other hand, be able to communicate amongst each other to commonly agree on an optimum "team" set-up for fulfilling the required tasks. This requires some robot workheads 20 to autonomously assemble with certain optimum robot platforms 10 in order to flexibly form modularized robots as currently needed in the working environment.

The functional intelligence (knowledge) for workhead applications may be usually inside the microprocessor of the robot workhead 20, while the positioning intelligence (knowledge) may be usually inside the microprocessor of the robot platform 10. An intermodule communication between platforms 10 and workheads 20 may be possible to exchange functional and positional data and information. The robot workheads 20 may be able to autonomously select the next task to be performed either from the centralized task database D or by being directly queried by the task controller C.

The suitable robot platform 20 may be found autonomously and/or by requesting it. If the task requires it, additional supporting swarm robot units may be requested in aid. For example, a drilling workhead may assemble with an aerial platform and additionally request aid from a vacuum cleaner workhead which may for this purpose assemble with a wheeled platform. A metrology workhead may be requested after the drilling task of the drilling robot has been completed in order to register detailed measurements of the work of the drilling robot for purposes of quality control.

When currently not in use or idle, any robot platform 10 or robot workhead 20 may indicate itself to the task controller C and/or the remaining swarm members as being available. Additionally, when a robot platform 10 or robot workhead 20 needs to be recharged or cleaned, it may indicate itself to the task controller C and/or the remaining swarm members as being out of order. The swarm F may be setup/assembled either autonomously, for example due to its self-conferred mobility, or with the support of a human operator. Each of the robot platforms 10 and robot workheads 20 may be equipped with some degree of autonomation mechanism allowing an interruption of the working process swiftly and in-time for maintenance, inspection and repair of the platforms 10 and workheads 20 themselves. The remaining swarm members may independently continue with their assigned tasks so that the temporary failure of some swarm members will not bring the whole task execution to a halt.

As exemplarily illustrated in Fig. 14, stages of a method M for fulfilling a task using a swarm of modularized robots is exemplarily shown. The method M may in particular be used in a working environment 100 as shown and explained in conjunction with Fig. 12 and it may employ one or more modularized robots as shown and explained in conjunction with Figs. 1 to 11. The method M may be particularly advantageous in performing tasks during the construction, assembly, maintenance, disassembly, operation and/or repair of an aircraft or spacecraft. Aircraft and spacecraft may for example comprise airplanes, drones, helicopters, carrier rockets, boosters, spaceships, satellites, and space stations.

The method M comprises at M1 providing, by a centralized task database D, a task to a plurality of robot workheads 20. Each of the robot workheads 20 is configured to convey the ability to perform one of a plurality of operational tasks to an assembled modular robot. Depending on the provided task, the plurality of robot workheads 20 then determine at M2 which one of a plurality of robot platforms 10 to combine with. The robot platforms 10 are each configured to convey mobility and connectivity to external components to an assembled modular robot. At M3, one or more modularized robots may then be formed by connecting one or more of the plurality of robot workheads 20 with the determined one of the plurality of robot platforms 10. Those modularized robots are then able, at M4 to perform the provided task.

When the task has been completed, the centralized task database D may be updated by the respectively assigned robot at MS. Then, the robot may disassemble again, by disconnecting, at M6, the robot workhead 20 from the combined robot platform 10. The disconnected parts - workhead 20 and platform 10 - are then free again to take on another task from the centralized task database D.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 1: Robot adapter
- 2: Mechanical connector
- 3: Data interface
- 4: Power connector
- 5: Microprocessor
- 6: Mechanical receptacle
- 7: Data interface
- 8: Power connector
- 9: Microprocessor
- 10: Robot platform
- 11: Helicopter blades
- 12: Wheels
- 13: Extension boom
- 14: Cold gas nozzles
- 20: Robot workhead
- 21: Vacuum cleaner device
- 22: Grid
- 23: Black light
- 24: Camera unit
- 25: 3D-printing system
- 26: Roll cleaner
- 27: Wire fixer
- 30: Industrial robot
- 40: Human worker
- 50: Fuselage section
- 60: Scaffolding
- 70: Passenger deck
- 80: Cargo deck
- 100: Working environment
- C: Task controller
- D: Centralized task database
- F: Swarm
- M: Method
- M1: Method step
- M2: Method step
- M3: Method step
- M4: Method step
- M5: Method step
- M6: Method step
- R1: Modularized robot
- R2: Modularized robot
- R4: Modularized robot
- R5: Modularized robot
- R6: Modularized robot
- R7: Modularized robot
- R8: Modularized robot
- R9: Modularized robot
- R10: Modularized robot
- R11: Modularized robot
- R12: Connector platform
- S1: Surveillance robot
- S2: Surveillance robot
- W: Worker

## Claims

1. Modularized robot, comprising:
a robot platform (10) configured to convey mobility and connectivity to external components to the modularized robot;
a robot workhead (20) configured to convey the ability to perform an operational task to the modularized robot; and
a robot adapter (1) attached to either the robot platform (10) or the robot workhead (20) and configured to mechanically link the robot platform (10) to the robot workhead (20).

2. Modularized robot according to claim 1, wherein the robot adapter (1) comprises a mechanical connector (2) configured to mechanically interlock with a corresponding mechanical receptacle (6) in either the robot workhead (20) or the robot platform (10).

3. Modularized robot according to claim 2, wherein the robot adapter (1) is further configured to form a data communication link between the robot platform 10 and the robot workhead 20.

4. Modularized robot according to one of the claims 1 to 3, wherein each of the robot platform (10) and the robot workhead (20) comprises a microprocessor (5) which executes software or firmware responsible for the autonomous functionality of the robot platform (10) and the robot workhead (20), respectively.

5. Modularized robot according to one of the claims 1 to 4, wherein the robot adapter (1) is further configured to provide an electrical power supply connection between the robot platform (10) and the robot workhead (20).

6. Modular robot assembly kit, comprising:
a plurality of robot platforms (10), each configured to convey mobility and connectivity to external components to an assembled modular robot; and
a plurality of robot workheads (20), each configured to convey the ability to perform one of a plurality of operational tasks to an assembled modular robot,
wherein each of the plurality of robot workheads (20) comprises a robot adapter (1) configured to mechanically link one of the robot platforms (10) to the respective robot workhead (20).

7. Modular robot assembly kit according to claim 6, wherein the plurality of robot platforms (10) comprise at least two of a drone with helicopter or quadcopter blades (11) or cold gas nozzles (14), a ground vehicle with movement conveying kinematic devices (12), a connector platform for coupling to industrial robots (30) and a connector platform mounted on an handheld extension boom (13).

8. Modular robot assembly kit according to claim 6, wherein the plurality of robot workheads (20) comprise at least two of a vacuum cleaner system (21), a camera system (24), a 3D-printer system (25) and a roll cleaner system (26).

9. Swarm of modularized robots, comprising a plurality of modularized robots according to one of the claims 1 to 5.

10. Swarm of modularized robots, comprising a plurality of modularized robots built with a modular robot assembly kit according to one of the claims 6 to 8.

11. Robot system, comprising:
a swarm of modularized robots according to one of the claims 9 and 10;
a centralized task database (D) configured to store and update a plurality of tasks to be performed by the swarm of modularized robots; and
a task controller (C) coupled to the centralized task database (D) and configured to manage the stored tasks in the centralized task database (D) depending on priority, hierarchy and/or importance of the tasks.

12. Method (M) of fulfilling tasks by a swarm of modularized robots, particularly a swarm of modularized robots according to one of the claims 9 and 10, the method (M) comprising:
providing (M1), by a centralized task database (D), a task to a plurality of robot workheads (20), each of the robot workheads (20) configured to convey the ability to perform one of a plurality of operational tasks to an assembled modular robot;
determining (M2), by the plurality of robot workheads (20), one of a plurality of robot platforms (10) to combine with, each configured to convey mobility and connectivity to external components to an assembled modular robot;
forming (M3) one or more modularized robots by connecting one or more of the plurality of robot workheads (20) with the determined one of the plurality of robot platforms (10); and
performing (M4), by the combined modularized robot, the provided task.

13. Method (M) according to claim 12, further comprising:
updating (M5), upon completion of the provided task, the centralized task database (D); and
disconnecting (M6) the plurality of robot workheads (20) from the determined robot platforms (10).

14. Use of a method (M) according to one of the claims 12 and 13 for assembly, maintenance, operation, repair or disassembly of aircraft or spacecraft.
